Europäisches Patentamt

European Patent Office

Office européen des brevets

(19)

(11) Numéro de publication: **0 235 481 B1**

(12)

# FASCICULE DE BREVET EUROPEEN

(45) Date de publication de fascicule du brevet:
**18.12.91**

(51) Int. Cl.⁵: **F02B 13/10,** F02B 47/08,
F02M 25/06

(21) Numéro de dépôt: **86402915.2**

(22) Date de dépôt: **23.12.86**

Demande divisionnaire 90120446.1 déposée le
23/12/86.

(54) **Dispositif d'introduction de gaz sous pression dans une chambre de combustion d'un moteur alternatif à combustion interne.**

(30) Priorité: **30.12.85 FR 8519432**

(43) Date de publication de la demande:
**09.09.87 Bulletin 87/37**

(45) Mention de la délivrance du brevet:
**18.12.91 Bulletin 91/51**

(84) Etats contractants désignés:
**BE DE FR GB IT NL SE**

(56) Documents cités:
**EP-A- 0 189 716**
**EP-A- 0 192 010**
**DE-A- 1 576 009**
**DE-A- 2 453 193**
**GB-A- 1 102 754**

(73) Titulaire: **INSTITUT FRANCAIS DU PETROLE**
**4, Avenue de Bois-Préau**
**F-92502 Rueil-Malmaison(FR)**

(72) Inventeur: **Duret, Pierre**
**124, boulevard Saint-Germain**
**F-75006 Paris(FR)**

Rank Xerox (UK) Business Services

## Description

La présente invention concerne un dispositif pour introduire un gaz sous pression dans une chambre de combustion d'un moteur alternatif à combustion interne. Le dispositif selon l'invention permet, lorsqu'il est appliqué à un moteur à allumage commandé, une amélioration de l'initiation de la combustion et une augmentation de la vitesse de combustion par introduction de gaz (air ou mélange carburé avec éventuellement des gaz brûlés) au voisinage des électrodes de la bougie et de l'instant d'allumage.

Le dispositif suivant l'invention utilise la pression et éventuellement les effets d'onde de pression des gaz brûlés pendant la détente dans un cylindre pour injecter une certaine quantité d'air ou de mélange carburé avec éventuellement des gaz brûlés au voisinage de la bougie d'allumage de ce même cylindre.

Ainsi, la présente invention concerne un moteur à combustion interne comportant une canalisation reliée au cylindre via une lumière ou un orifice à une extrémité et reliée à l'autre extrémité à un orifice débouchant dans la chambre de combustion au voisinage de la bougie.

Cette canalisation comporte un organe d'obstruction, tel une soupape ou un clapet anti-retour, localisé de préférence à proximité de l'extrémité de cette canalisation débouchant dans la chambre de combustion.

Cet organe d'obstruction n'autorise le passage de gaz que dans le sens de la canalisation vers la chambre de combustion.

Selon un mode préféré de réalisation, l'extrémité de la canalisation débouchant dans la chambre de combustion est orientée de façon à introduire les gaz en direction de la bougie d'allumage, ceci n'est pas le cas du dispositif décrit dans DE-A-1.576.009.

Le dispositif selon l'invention permet de réaliser un gradient de vitesses autour des électrodes de la bougie ce qui favorise l'initiation de la combustion. De même il permet de réaliser un gradient de concentration de la charge au voisinage des électrodes de la bougie lorsque les gaz provenant de la canalisation débouchant dans le cylindre sont enrichis en carburant.

La présente invention concerne le dispositif décrit dans les revendications 1 à 5.

Dans le cas où les deux extrémités de la canalisation sont sur le même cylindre, on pourra séparer la canalisation en deux parties par un deuxième organe d'obstruction n'autorisant également que le même sens de circulation aux gaz. Ainsi, le volume défini entre les deux organes d'obstruction, dans la deuxième partie de la canalisation qui débouche dans la chambre de combustion, pourra rester sous pression pendant la suite du cycle jusqu'à la phase de compression du cycle suivant et servir de source d'air ou de mélange carburé injecté sous pression.

Selon une variante, la première partie de la canalisation qui ne reste pas sous pression pendant la suite du cycle (c'est-à-dire de la fin de la détente jusqu'au début de la compression) pourra être balayée des gaz brûlés qu'elle pourrait éventuellement comporter, par de l'air ou du mélange carburé, aspiré via un organe anti-retour débouchant sur une source d'air ou de gaz carburé juste en amont de l'organe d'obstruction séparant la canalisation en deux parties.

La lumière, extrémité de la canalisation côté cylindre pourra être de préférence positionnée sur le cylindre et avoir une forme telle qu'elle favorise l'utilisation de la pression des gaz brûlés et éventuellement des effets d'ondes de pression.

De même, l'emplacement de l'extrémité débouchant dans la chambre de combustion et sa géométrie déterminant la forme et la direction du jet, seront définis de façon à rechercher l'amélioration de la combustion.

On ne sortira pas du cadre de la présente invention si la canalisation dans sa partie étanche et sous pression comporte un dispositif d'enrichissement en combustible.

D'une manière générale, la présente invention concerne un dispositif d'introduction de gaz sous pression dans une chambre de combustion d'un moteur à combustion interne comportant au moins un cylindre.

Ce dispositif comporte une canalisation et un organe d'obstruction intermittente, ladite canalisation mettant en communication ledit cylindre et ladite chambre de combustion via ledit organe d'obstruction. Ce cylindre comporte au moins une bougie. L'axe de cette canalisation au niveau du cylindre est dirigé vers les électrodes de la bougie.

Les avantages et les caractéristiques de l'invention seront mis en évidence dans la suite de la description, donnée à titre d'exemple non limitatif, en se référant aux figures annexées parmi lesquelles :

- la figure 1 montre schématiquement et en coupe un moteur à combustion interne équipé du dispositif suivant l'invention,
- les figures 2 et 6 illustrent un détail de réalisation de la lumière et de son raccordement avec une canalisation,
- la figure 3 facilite la compréhension des figures suivantes illustrant le fonctionnement du moteur,
- la figure 4 illustre le fonctionnement du moteur représenté sur la figure 1, et
- la figure 5 illustre une variante du dispositif.

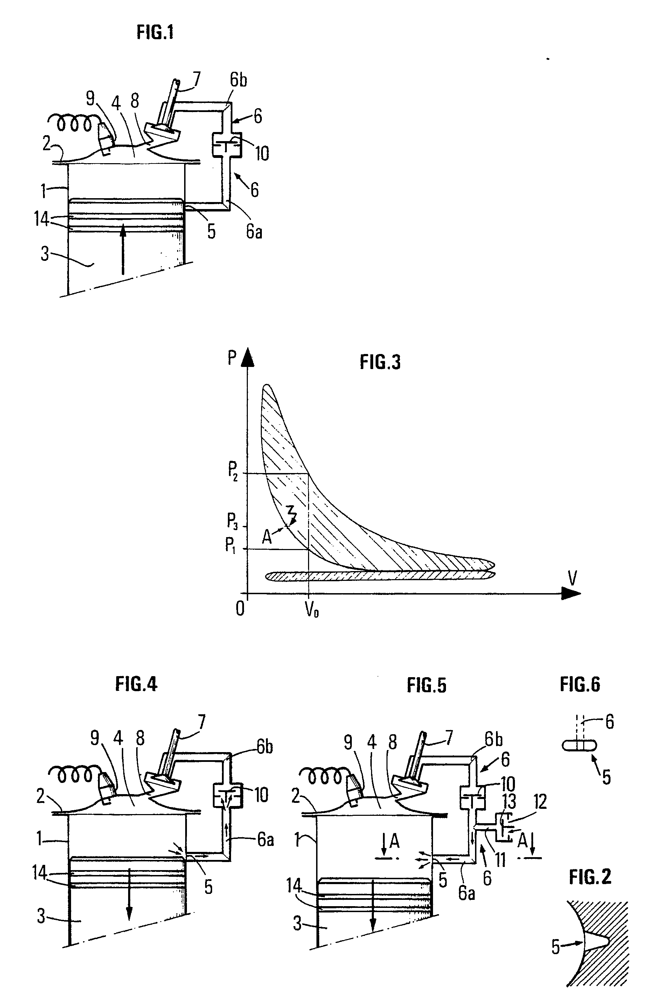

La figure 1 est une représentation schématique d'un cylindre d'un moteur à combustion interne équipé du dispositif suivant l'invention.

La référence 1 désigne le cylindre fermé à sa partie supérieure par la culasse 2. Dans le cylindre se déplace le piston 3 définissant la chambre de combustion 4.

Une lumière 5 pratiquée dans la paroi du cylindre 1 communique avec une canalisation schématisée en 6.

Un organe d'obstruction 7, tel une soupape (qui peut être commandée par une came) ou clapet anti-retour permet d'obturer la canalisation 6 à certaines périodes du cycle en amont de l'orifice 8 débouchant dans la chambre 4 au voisinage de la bougie 9. La canalisation alimentant l'orifice 8 est orientée de manière à diriger les gaz vers les électrodes de la bougie 9.

Ceci permet de réaliser un gradient de vitesse autour des électrodes de la bougie ce qui favorise l'initiation de la combustion. Par ailleurs ceci permet lorsque les gaz provenant de l'orifice 8 sont enrichis en carburant de réaliser un gradient de concentration en carburant autour des électrodes de la bougie, ce qui est également favorable à l'initiation de la combustion. Un tel agencement permet un bon fonctionnement du moteur en mélange globalement pauvre ou dilué par des gaz recyclés comme cela se fait sur certains moteurs. Bien entendu ce recyclage des gaz de combustion est totalement indépendant de la canalisation 6 qui ne transfère que de faibles débits.

Dans le cas d'un monocylindre (Fig. 1) la canalisation 6 pourra être divisée en deux parties 6a et 6b par un deuxième dispositif d'obstruction ou anti-retour 10. Les deux organes d'obstruction 7 et 10 permettent ainsi d'isoler un volume sous pression 6b, n'ayant plus obligatoirement la forme d'une canalisation.

Le diagramme (PV) de la figure 3 montre que si $V_0$ est le volume de la chambre de combustion 4 lorsque le piston 3 obture juste la lumière 5, la pression dans la chambre de combustion 4 a la valeur $P_1$ pendant la phase de compression, et la valeur $P_2$ très supérieure à $P_1$ pendant la phase de détente, $P_2$ pouvant être aussi nettement supérieure à $P_3$, pression à l'instant de l'allumage.

Le fonctionnement du moteur de la figure 1 est décrit ci-après en se référant également à la figure 4.

Sur la figure 1, le segment de tête 14 ou le piston 3 est dans sa phase de compression et vient obturer la lumière 5. La pression dans la chambre 4 vaut donc $P_1$ d'après la figure 3. Il en résulte que le volume 6a est rempli par les gaz du cylindre à une pression d'environ $P_1$.

Comme cela sera expliqué plus loin par la description des figures suivantes, le volume 6b est lui, à une pression proche de $P_2$ (Fig. 3).

Si l'organe d'obstruction 7 n'a pas encore été ouvert, le deuxième organe d'obstruction 10 est en principe fermé.

Le premier organe d'obstruction 7 peut être ouvert pendant la compression avant l'instant d'allumage. Cela peut être avant ou après l'instant du cycle de la figure 1, tant que la pression de la chambre 4 ne dépasse pas celle du volume 6b. A l'ouverture de cet organe, une partie du contenu du volume 6b (mélange carburé avec éventuellement des gaz brûlés) est injecté dans la chambre 4 au voisinage de la bougie d'allumage afin de créer des turbulences et une stratification favorable à la combustion.

La combustion a lieu dans de bonnes conditions d'initiation et de propagation, le piston 3 continue sa montée et redescend après le point mort haut pour se retrouver dans les conditions de la figure 4 où il vient de découvrir la lumière 5.

La chambre de combustion est alors à une pression $P_2$ (Fig. 3). A l'ouverture de la lumière, des gaz brûlés à la pression $P_2$ vont pousser les gaz de la canalisation 6a dans le volume 6b via l'organe anti-retour qui va s'ouvrir sous l'effet de la pression supérieure et même des effets d'onde de pression liés à l'ouverture brutale de la lumière 5.

Ainsi, l'organe d'obstruction 7 étant fermé, le volume 6b va se remplir à une pression voisine de $P_2$.

Les phases suivantes du cycle ne devraient pas modifier la pression dans le volume 6b, jusqu'à l'ouverture de l'organe d'obstruction 7 pendant la phase de compression du cycle suivant.

Les étapes de fonctionnement décrites ci-dessus sont alors reproduites dans le même ordre.

D'une manière générale selon la présente invention l'organe d'obturation 7 est ouvert lorsque le cylindre qu'il équipe est en phase de compression ou de fin de compression et l'énergie qui va servir à transférer les gaz contenus dans la canalisation 6 provient de la différence de pression $P_2-P_1$ (cf. fig. 3) entre les gaz de détente d'un cylindre ($P_2$) et de compression du même cylindre ($P_1$).

Une variante de l'invention (Fig. 5) consiste à ajouter au moteur décrit de la figure 1 sur la canalisation 6a à proximité de l'organe anti-retour 10, une canalisation auxiliaire 11 débouchant sur une source de gaz par exemple à l'air libre, dans un filtre à air ou dans un organe d'alimentation en mélange carburé (carburateur par exemple) par l'orifice 12.

L'orifice 12 est équipé d'un organe anti-retour 13 qui peut être par exemple un clapet. Ainsi, pendant la phase d'admission représentée sur la figure 5, les gaz brûlés qui auraient pu pénétrer dans la canalisation 6a sont balayés par des gaz provenant de cette source et qui sont de préférence des gaz frais aspirés à l'extérieur via l'orifice 12.

On ne sortirait pas du cadre de l'invention en disposant un organe d'enrichissement en combustible à un emplacement situé sur la canalisation 6.

Bien entendu dans ce cas l'essentiel du carburant est introduit dans le cylindre par un autre moyen. Ceci peut être réalisé notamment par l'utilisation d'un carburateur ou par l'injection du carburant dans les pipes d'admission du moteur.

Pour bénéficier d'un effet d'onde de pression maximum à l'ouverture de la lumière 5, il pourra être envisagé de donner à celle-ci et à son raccordement avec la canalisation 6, la forme appropriée permettant d'augmenter ces effets. Un exemple est indiqué aux figures 6 et 2, utilisant une forme convergente. La figure 2 représente la coupe AA indiquée à la figure 5. La figure 6 représente la forme de la lumière 5 telle qu'elle serait vue par un observateur situé à l'intérieur du cylindre.

D'ailleurs d'une manière générale la canalisation 6 n'a pas pour rôle d'injecter la totalité du carburant dans le moteur mais de favoriser l'initiation de la combustion par la création d'un gradient de vitesses autour des électrodes de la bougie et/ou par la création d'un gradient de concentrations autour des électrodes de la bougie en l'y enrichissant en carburant. Dans ce cas bien entendu la canalisation 6 comportera un organe d'introduction du combustible. Ainsi au moment où la canalisation 6 dirige son jet vers les électrodes de la bougie 9 pour favoriser l'initiation de la combustion, normalement le cylindre contient un mélange d'air et de carburant et est de plus dans sa phase de compression. Selon un mode de réalisation préféré l'organe d'obturation est fermé juste avant que le signal d'allumage n'excite la bougie ceci notamment dans le cas ou l'organe d'obturation est commandé.

De même, une source d'enrichissement en combustible pourrait être placée le long de la canalisation 6, le dessin de la lumière 5 et son raccordement avec la canalisation 6 étant adaptés à augmenter les effets d'onde de pression.

La présente invention s'applique à tous types de moteurs à combustion interne à allumage commandé et elle permet le contrôle de l'aérodynamique interne de la charge contenue dans les cylindres du moteur équipés du dispositif selon la présente invention. Selon un mode de réalisation de la présente invention l'organe d'obturation 7 est en position ouverte alors que le cylindre qu'il équipe est en phase de compression.

## Revendications

1. Dispositif d'introduction de gaz sous pression dans une chambre de combustion d'un moteur à combustion interne comportant au moins un cylindre, une canalisation (6) joignant ledit cylindre et ladite chambre de combustion, ladite chambre de combustion comportant au moins une bougie (9), l'axe de la canalisation au niveau de la chambre de combustion étant dirigé vers les électrodes de ladite bougie, caractérisé en ce que ledit cylindre (1) et ladite chambre de combustion (4) définissent un même espace de combustion, en ce que ladite canalisation comporte un premier organe d'obstruction intermittente (7) et en ce que ladite canalisation comporte un deuxième organe d'obstruction (10) situé dans la portion de canalisation (6) comprise entre ledit cylindre (1) et ledit premier organe d'obstruction (7) partageant ladite portion en deux volumes (6a, 6b).

2. Dispositif selon la revendication 1, caractérisé en ce que ladite canalisation (6) communique via une canalisation auxiliaire (11) avec une source de gaz, ladite canalisation auxiliaire (11) comportant un troisième organe d'obstruction.

3. Dispositif selon la revendication 1, caractérisé en ce que ladite canalisation (6) comporte un organe d'introduction de combustible.

4. Dispositif selon la revendication 1, caractérisé en ce que l'extrémité de ladite canalisation relié au cylindre a une forme convergente adaptée à recueillir l'onde de pression.

5. Dispositif selon la revendication 1, caractérisé en ce que ledit organe d'obstruction intermittente s'ouvre alors que les gaz contenus dans la chambre de combustion sont en phase de compression.

## Claims

1. Device for introducing gas under pressure into the combustion chamber of an internal combustion engine, comprising at least one cylinder, a duct (6) joining the said cylinder and the said combustion chamber (1) which includes at least one spark plug (9), the axis of the duct at the level of the combustion chamber being directed towards the electrodes of the said spark plug, characterised in that the said cylinder (1) and the said combustion chamber (4) define the same combustion space, the said duct including a first intermittent obstruction element (7) and in that the said duct includes a second obstruction element (10) positioned in that portion of the duct (6) located between the said cylinder (1) and the said first obstruction element (7), this dividing the said portion into two volumes (6a, 6b).

2. Device in accordance with claim 1, characterised in that the said duct (6) communicates via an auxiliary duct (11) with a source of gas, the said auxiliary duct (11) including a third obstruction element.

3. Device in accordance with claim 1, characterised in that the said duct (6) includes an element for the introduction of a fuel.

4. Device in accordance with claim 1, characterised in that the end of the said duct connected to the cylinder has a convergent form designed to receive the pressure wave.

5. Device in accordance with claim 1, characterised in that the said intermittent obstruction element opens when the gases contained in the combustion chamber are at the compression stage.

**Patentansprüche**

1. Vorrichtung zum Einführen von unter Druck stehendem Gas in eine Verbrennungskammer einer Brennkraftmaschine mit wenigstens einem Zylinder, einer diesen Zylinder und diese Brennkammer verbindenden Leitung (6), wobei diese Verbrennungskammer (1) wenigstens eine Zündkerze (9) umfaßt und die Achse der Leitung in Höhe der Brennkammer gegen die Elektroden der Zündkerze (9) gerichtet ist, dadurch gekennzeichnet, daß dieser Zylinder (1) und diese Brennkammer (4) ein und den gleichen Brennraum definieren, wobei die Leitung ein erstes intermittierendes Sperrorgan (7) umfaßt und daß diese Leitung ein zweites Sperrorgan (10) umfaßt, das in dem Teil der Leitung (6) das zwischen diesem Zylinder (1) und dem ersten Sperrorgan (7) enthalten ist, angeordnet ist und welches diesen Teil in zwei Volumina (6a, 6b) unterteilt.

2. Vorrichtung nach Anspruch 1, dadurch gekennzeichnet, daß diese Leitung (6) über eine Hilfsleitung (11) mit einer Gasquelle in Verbindung steht, wobei diese Hilfsleitung (11) ein drittes Sperrogan umfaßt.

3. Vorrichtung nach Anspruch 1, dadurch gekennzeichnet, daß diese Leitung (6) ein Brennstoffeinführorgan umfaßt.

4. Vorrichtung nach Anspruch 1, dadurch gekennzeichnet, daß das Ende diesem mit dem Zylinder verbundenen Leitung eine konvergente für die Aufnahme der Druckwelle ausgelegte Form hat.

5. Vorrichtung nach Anspruch 1, dadurch gekennzeichnet, daß dieses intermittierende Sperrorgan öffnet, während die in der Brennkammer enthaltenen Gase in Kompressionsphase sich befinden.

**FIG.1**

**FIG.3**

**FIG.4**

**FIG.5**

**FIG.6**

**FIG.2**